## Europäisches Patentamt
## European Patent Office
## Office européen des brevets

(19)

(11) Veröffentlichungsnummer: **0 012 383**
**B1**

(12)

# EUROPÄISCHE PATENTSCHRIFT

(45) Veröffentlichungstag der Patentschrift: **13.10.82**

(51) Int. Cl.³: **F 16 P 3/16, H 01 H 3/14**

(21) Anmeldenummer: **79104980.2**

(22) Anmeldetag: **06.12.79**

(54) Sicherheitseinrichtung für Anlagen mit frei in den Raum beweglichen Teilen.

(30) Priorität: **16.12.78 DE 2854459**

(43) Veröffentlichungstag der Anmeldung:
**25.06.80 Patentblatt 80/13**

(45) Bekanntmachung des Hinweises auf die Patenterteilung:
**13.10.82 Patentblatt 82/41**

(84) Benannte Vertragsstaaten:
**BE DE FR GB NL SE**

(56) Entgegenhaltungen:
**DE - B - 1 763 891**
**DE - C - 435 059**
**DE - C - 1 003 423**
**FR - A - 2 266 145**
**FR - A - 2 268 904**
**US - A - 3 944 763**
**US - A - 4 088 856**

(73) Patentinhaber: **Fraunhofer-Gesellschaft zur Förderung der angewandten Forschung e.V.**
**Leonrodstrasse 54**
**D-8000 München 19 (DE)**

(72) Erfinder: **Nicolaisen, Peter, Dipl.-Ing.**
**Kreuznacherstrasse 15**
**D-7000 Stuttgart 50 (DE)**

(74) Vertreter: **Hansmann, Dierk, Dipl.-Ing.**
**Jessenstrasse 4**
**D-2000 Hamburg 50 (DE)**

## Sicherheitseinrichtung für Anlagen mit frei in den Raum beweglichen Teilen

Die Erfindung bezieht sich auf eine Sicherheitseinrichtung für Anlagen mit frei in den Raum beweglichen Teilen, insbesondere für Handhabungsgeräte (Industrieroboter) und führerlose Transportfahrzeuge. Bei Kollision der bewegten Teile mit Personen oder Gegenständen (Objekten) wird ein Steuersignal erzeugt, das die bewegten Teile stillsetzt oder ein Notlaufprogram in Gang setzt, welches z.B. eine der Kollisionsrichtung entgegengesetzte Bewegungsfolge bewirkt.

Aus der DE—A—26 44 608 ist eine derartige sicherheitseinrichtung bekannt. Bei dieser kommt ein im wesentlichen längs einer Kante angeordneter Signalgeber zum Einsatz. Der Kollisionsort muß hierbei zumindest bezüglich einer Linie oder Fläche bekannt sein. Der Signalgeber besteht aus einer Widerstandsschicht, deren Widerstand sich in Abhängigkeit von der Verformung verändert. Der erforderliche, relative große Verformungsweg (Fühlweg) kann für kleine Geschwindigkeiten, wie sie z.B. bei Rolltoren auftreten, ausreichen. Bei großen Geschwindigkeiten wie z.B. bei Industrierobotern geht ein großer Teil der Schutzwirkung verloren. Bei großvolumigen Ausführungen, wie sie etwa zur Absicherung von Industrieroboterachsen erforderlich sind, ergeben sich weiterhin ungünstige Verhältnisse ΔR/R gesamt, so daß entweder eine große Empfindlichkeit des Systems erforderlich ist und dadurch kein einwandfreies Ansprechen erreicht wird, da ΔR im Bereich der Fertigungstoleranz liegt, oder ein so großes Volumen verformt werden muß, daß etwa das Berühren der Sicherheitseinrichtung mit dem Finger zu keinem Abschaltsignal führt. R gesamt bedeutet hierbei den elektrischen Widerstand der Widerstandsschicht ohne Verformung, ΔR die Widerstandsänderung bei einer bestimmten Verformung.

Aus der US—A—3 629 774 ist ein Widerstandselement bekannt, das bei seiner Verformung seinen Widerstand ändert. Es hat die gleichen Nachteile wie der Signalgeber der DE— A—26 44 608.

Der Erfindung liegt die Aufgabe zugrunde, eine Sicherheitseinrichtung der eingangs genannten Art so auszubilden, daß auch bei nicht genau vorherbestimmbarem Kollisionsort eine sichere Abschaltung der bewegten Teile bzw. die Einschaltung eines Notlaufprogrammes gewährleistet ist. Darüber hinaus sollen die Schaltmittel so angeordnet und ausgebildet werden, daß im Kollisionsfall Bewegungsenergie ohne das Auftreten hoher Kräfte am Objekt aufgenommen werden kann.

Die Lösung dieser Aufgabe geschieht erfindungsgemäß durch die Merkmale des Patentanspruchs 1. Vorteilhafte Weiterbildungen der Erfindung sind in den Ansprüchen 2 bis 4 angegeben.

Durch den Aufbau aus der Schaltschicht und zwei Elektrodenschichten ergibt sich eine besonders einfache und schmiegsame Ausbildung eines Schaltmittels, das ohne Schwierigkeiten flächenhaft auf den Stellen der bewegten Teile angebracht werden kann, die durch ihre Form und Bewegungsenergie eine Gefahr darstellen, so daß bei allen möglichen Orten und Richtungen einer Kollision die Bewegung der Teile angehalten oder z.B. umgekehrt wird.

Dabei wird durch die unter oder auf diesem mehrschichtigen Schaltmittel angeordnete, plastisch oder elastisch verformbare Schichtbewegungsenergie aufgenommen, ohne daß am Objekt schädliche Kräfte auftreten.

Handelsübliche Ausführungen der im Anspruch 1 erwahnten, bei Druckbeanspruchung elektrisch leitenden Kunststoffschicht sind unter den Handelsnamen "Dynacon" und "Sensopress" bekannt und in Prospekten der Firmen "Dynacon Industries" in Leonia N.J. V. St.A. sowie "Orcus International" (deutsche Vertretung Fa. itc, 6343 Frohnhausen) beschrieben. Eine Verformung dieser leitenden Kunststoffschichten erfolgt bei Druckbeanspruchungen, wie sie zur Erzeugung des Steuersignals erforderlich sind, praktisch noch nicht.

Ein Ausführungsbeispiel der erfindungsgemäßen Sicherheitseinrichtung ist in den Zeichnungen schematisch dargestellt. Es zeigen:

Figur 1 eine Sicherheitseinrichtung für einen Industrieroboter;

Figur 2 einen Schnitt durch das bei der Einrichtung nach Figur 1 verwendete Schaltmittel mit untergelegtem Schaumstoffpolster in größerem Maßstab.

Der z.B. zur Handhabung von Werkstücken eingesetzte Industrieroboter I weist u.a. die bewegten Teile 1 (rotierend) und 1' (hin- und hergehend) auf. An den auf Grund ihrer Lage, ihrer Form und ihrer Bewegungsenergie bei Kollision eine Gefahr für ein zu schützendes Objekt 6, z.B. eine Bedienungsperson, darstellenden Oberflächen der bewegten Teile 1, 1' sind Schaltmittel 2 flächenhaft verteilt.

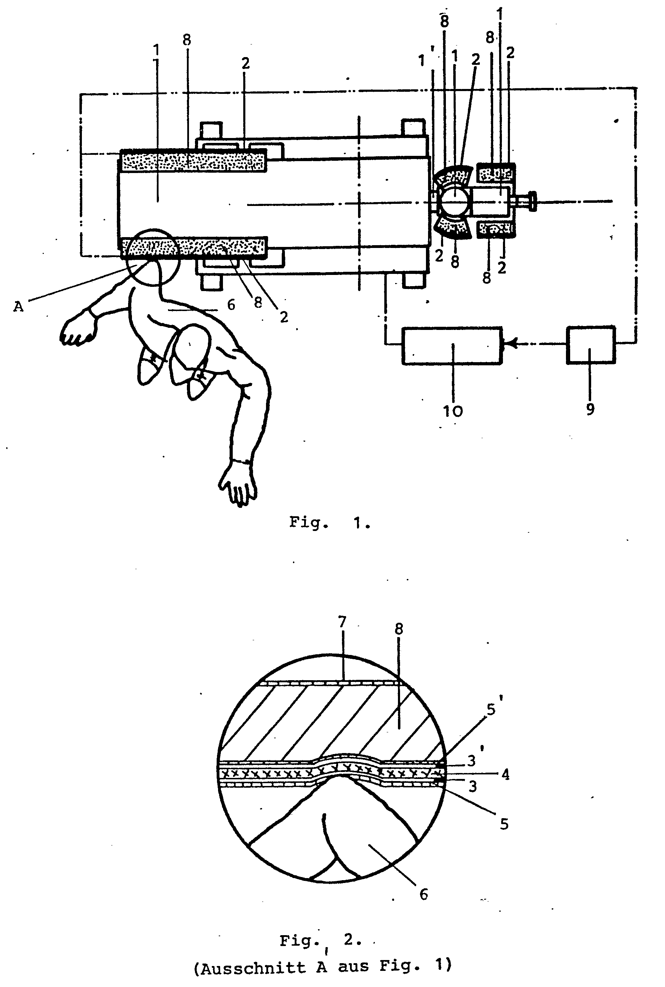

Die Schaltmittel 2 bestehen, wie aus der Figur 2 besonders deutlich ersichtlich ist, aus einer zunächst elektrisch isolierenden, bei Druckbeanspruchung aber elektrisch leitenden Kunststoffschicht 4, die zwischen zwei flächenhaften Elektroden 3, 3', z.B. Metallfolien oder Metallnetzen, angeordnet ist. Im Betriebszustand sind die Elektroden 3, 3' mit unterschiedlicher Spannung beaufschlagt und über eine Anpaßelektronik 9 mit einer Steuereinrichtung 10 verbunden, die beim Durchgang eines elektrischen Stromes durch die Kunststoffschicht 4 ein die bewegten Teile 1, 1' stillsetzendes oder ein Notlaufprogramm in Gang setzendes Signal auslöst. Die Elektroden 3, 3' sind auf ihrer der Kunststoffschicht 4 abgewandten Seite von je einer Kunststofffolie 5, 5' bedeckt, die einerseits die Elektroden 3, 3' vor Beschädigung schützen und von denen außerdem zumindest die äußere Folie 5 durch eine auffällige Farbgebung den Wirkungsbereich der Sicherheitseinrichtung kenntlich macht.

Zwischen den Schaltmitteln 2 und den bewegten Teilen 1, 1' oder auf den Oberseiten der Schaltmittel 2 befindet sich jeweils eine elastische oder Plastisch verformbare Schicht 8, die z.B. auf das Machinengehäuse 7 aufgeklebt ist. Durch diese Schicht 8 soll erreicht werden, daß erstens der Schaltpunkt möglichst weit in Bewegungsrichtung der Teile 1, 1' nach vorn verlegt wird (ehe es zu einer direkten Berührung der harten Maschinenteile mit dem Objekt kommt), daß zweitens die aus der Bewegungsenergie resultierende Kraft auf eine möglichst große Fläche wirkt, um den, z.B. von einem Menschen zu ertragenden Druck gering zu halten, und daß schließlich ein Teil der Bewegungsenergie in andere, dem Menschen nicht schadende Energieformen, z.B. Verformungsarbeit, umgewandelt wird. Dies kann z.B. durch eine Polsterschicht aus elastischem Polyurethan-Integralschaum oder aus einem plastisch verformbaren Körper (Alu-Blech, Holz, Pappe oder Kunststoff in Wabenstruktur) erreicht werden. Die deformierbare Schicht 8 ist so angeordnet, daß sie auch hervorstehende Teile, wie Schrauben oder Flansche, und scharfe Kanten in ausreichender Dicke überdeckt.

Anstelle von insgesamt flächenhaften Schaltmitteln können die Schaltmittel auch in einzelne Bausteine mit kleineren Abmessungen aufgeteilt sein, die nebeneinander auf die Oberfläche der bewegten Teile 1, 1' aufgebracht und elektrisch parallel geschaltet sind. Auf diese Weise lassen sich auch große und stark gekrümmte Oberflächen mit Schaltmitteln belegen.

Mit Hilfe der als Schaltverstärker ausgebildeten Anpaßelektronik 9 läßt sich der zur Signalauslösung an den Schaltmitteln 2 erforderliche Minimaldruck stufenlos einstellen.

Anstelle der bei Druckbeanspruchung elektrisch leitenden Schaltschicht 4 kann zwischen den flächenhaft ausgebildeten, biegsamen Elektroden 3, 3' der Schaltmittel 2 ein verdrängbares Material, z.B. eine elektrisch isolierende Flüssigkeit vorgesehen sein, die bei Verformung der Elektroden 3, 3' durch Stoß einen Kontakt der Elektroden erlaubt, wodurch die Steuereinrichtung 10 eingeschaltet wird.

### Patentansprüche

1. Sicherheitseinrichtung für Anlagen mit frei in den Raum beweglichen Teilen, insbesondere für Handhabungsgeräte (Industrieroboter) und führerlose Transportgeräte, mit Schaltmitteln, die bei Kollision der bewegten Teile mit Personen oder Gegenständen (Objekten) ein Steuersignal bewirken, das die bewegten Teile stillsetzt oder ein Notlaufprogramm in Gang setzt, welches z.B. eine der Kollisionsrichtung entgegengesetzte Bewegungsfolge bewirkt, dadurch gekennzeichnet, daß

a) als Schaltmittel (2) eine an sich bekannte, zunächst elektrisch isolierende, bei Druckbeanspruchung aber elektrisch leitende Kunststoffschicht (Schaltschicht 4) vorgesehen ist, die zwischen zwei Elektrodenschichten (3, 3') flächenhaft auf den Stellen der bewegten Teile (1, 1') angebracht ist, welche durch ihre Form und Bewegungsenergie bei Kollisionen eine Gefahr darstellen.

b) zwischen der Schaltschicht (5) mit den Elektrodenschichten (3, 3') und den bewegten Teilen (1, 1') oder außen auf der Oberseite dieser Schichten (4, 3, 3') eine plastisch oder elastisch verformbare Schicht (8) zur Aufnahme von Stoßenergie vorgesehen ist.

2. Sicherheitseinrichtung nach Anspruch 1, dadurch gekennzeichnet, daß die Elektrodenschichten (3, 3') auf ihrer der Schaltschicht (4) abgewandten Seite von einer isolierenden Kunststoffolie (5, 5') bedeckt sind.

3. Sicherheitseinrichtung nach Anspruch 2, dadurch gekennzeichnet, daß die Elektrodenschichten (3, 3') aus einseitig metallisierten Kunststoffolien bestehen, deren metallisierte Seite der Schaltschicht zugewandt ist.

4. Sicherheitseinrichtung nach Anspruch 1 bis 3, dadurch gekennzeichnet, daß aus Schaltschicht (4), Elektrodenschichten (3, 3') und eventuell verformbarer Schicht (8) gebildete Bausteine nebeneinander auf größeren, gekrümmten Oberflächenbereichen der bewegten Teile (1, 1') aufgebracht und die Elektroden der Bausteine parallel geschaltet sind.

### Revendications

1. Dispositif de sécurité pour des installations comportant des parties librement mobiles dans l'espace, en particulier pour appareils de manutentation (robots industriels) et appareils de transport sans conducteur, avec moyens de commande qui, en cas de collision entre les parties ou éléments déplacés et des personnes ou des objets, provoquent un signal de commande qui arrête les éléments déplacés ou qui déclenche un programme de secours déterminant par exemple une succession de mouvements en opposition au sens de la collision, caractérisé en ce que

a) comme moyen de commande (2), il est prévu une couche de matière synthétique (couche de commande 4), de genre connu en soi, qui est tout d'abord isolante de l'électricité, mais qui deviet conductrice de l'électricité en cas de sollicitation de pression, couche de matière synthétique qui est posée à plat entre deux couches d'électrodes (3, 3') aux endroits des éléments déplacés (1, 1') qui, par leur forme et par leur énergie cinétique, représentent un dager en cas de collisions;

b) la couche de commande (4), avec les couches d'électrodes (3, 3'), et les éléments déplacés (1, 1') ou extérieure sur la face supérieure des couches (4, 3, 3') il est prévu une couche (8) pouvant se déformer par plasticité ou par élasticité, qui est destinée à absorber l'énergie de choc.

2. Dispositif de sécurité suivant la revendication 1, caractérisé en ce que les couches d'électrodes (3, 3') sont, à la face opposée à celle où se trouve la couche de commande (4), revêtues d'und feuille de matière synthétique isolante (5, 5').

3. Dispositif de sécurité suivant la revendication 2, caractérisé en ce que les couches d'électrodes (3, 3') se composent de feuilles de matière synthétique métallisées à l'une des faces, dont la face métallisée est tournée vers la couche de commande.

4. Dispositif de sécurité suivant les revendications 1 à 3, caractérisé en ce que des éléments de construction formés d'une couche de commande (4), de couches d'électrodes (3, 3') et, èventuellement, d'une couche pouvant se déformer (8) sont posés l'un à côté de l'autre sur des zones de surface incurvées relativement grandes des éléments déplacés (1, 1') et en ce que les électrodes des éléments de construction sont montées en parallèle.

## Claims

1. Safety device for installations with parts moving freely in space, in particular for manipulation devices (industrial robotors) and driverless transportation devices, including switch elements which upon collision of the moved parts with persons or things (objects) cause a control signal which shuts down the moved parts or initiates an emergency operation program which causes for instance a sequence of movements opposite to the direction of collision, characterised in

a) that as switch element (2) there is provided a per se known initially electrically insulating plastics layer (switching layer 4) which turns electrically conductive upon being pressure strained and which is provided planarly between two electrode layers (3, 3') at those locations of the moved parts (1, 1') which as a result of their shapes and motion energy represent a risk upon collision;

b) between the switching layer (4) with the electrode layers (3, 3') and the moved parts (1, 1') or outside on the cover-side of these layers (4, 3, 3') a plastically or resiliently deformable layer (8) for receiving impact energy is provided.

2. Safety device according to claim 1, characterised in that the electrode layers (3, 3') are covered by an insulating plastics film (5, 5') on their side remote from the switching layer (4).

3. Safety device according to claim 2, characterised in that the electrode layers (3, 3') consist of unilaterally metallized films of plastics material, the metallized surface of which is directed toward the switching layer.

4. Safety device according to claim 1 to 3, characterised in that structural elements composed of switching layer (4), electrode layers (3, 3') and the possibly deformable layer (8) are applied juxtaposed on large curved surface regions of the moved parts (1, 1') and the electrodes of the structural elements are electrically connected in parallel.

**0012383**

Fig. 1.

Fig. 2.
(Ausschnitt A aus Fig. 1)